# EUROPEAN PATENT APPLICATION

(11) **EP 4 492 852 A1**
(43) Date of publication of application: **15.01.2025**
(21) Application number: 23766100.4
(22) Date of filing: 09.03.2023
(51) Int. Cl.: H04W 24/02

(54) **DATA ACQUISITION METHOD AND APPARATUS, TERMINAL AND NETWORK SIDE DEVICES**

(30) Priority: 10.03.2022 CN 202210240735
(71) Applicant: VIVO MOBILE COMMUNICATION CO., LTD., Dongguan, Guangdong 523863 (CN)
(72) Inventor: BAO, Wei, Dongguan, Guangdong 523863 (CN); BOUBACAR, Kimba Dit Adamou, Dongguan, Guangdong 523863 (CN); YUAN, Yannan, Dongguan, Guangdong 523863 (CN); LIU, Jiamin, Dongguan, Guangdong 523863 (CN)
(74) Representative: Shieldmark
(86) International application number: PCT/CN2023/080575
(87) International publication number: WO 2023/169523

(57) **Abstract**

This application discloses a data collection method and apparatus, a terminal, and a network-side device, belonging to the field of wireless communication. A data collection request method in embodiments of this application includes: a second network-side device receives a first data collection request transmitted by a first network-side device. The second network-side device transmits a second data collection request to a target base station based on the first data collection request, where information carried in the second data collection request includes at least one of the following: type indication information, indicating that a request type of the second data collection request is indication information of data collection; characteristic information of a terminal participating in data collection; a type of data that needs to be collected; a configuration for data collection; and identifier information, used for identifying a purpose of collected data.

## Description

### CROSS-REFERENCE TO RELATED APPLICATIONS

This application claims priority to Chinese patent application No. 202210240735.6, filed with the China National Intellectual Property Administration on March 10, 2022 entitled "DATA COLLECTION METHOD AND APPARATUS, TERMINAL, AND NETWORK-SIDE DEVICE", which is incorporated herein by reference in its entirety.

### TECHNICAL FIELD

This application relates to the field of wireless communication technologies, and more specifically, to a data collection method and apparatus, a terminal, and a network-side device.

### BACKGROUND

In a mobile communication system, a network may require that some terminals (User Equipment, UE) provide collected data, for example, network signal quality of a specific district, quality of service (Quality of Service, QoS) or quality of experience (Quality of Experience, QoE) of a specific service, a movement speed of UE, a quantity of specific objects in a specific district, a speed or size of a specific object present in a specific district, and the like.

However, as for how to trigger appropriate UE to perform data collection, no effective solution has been provided at present.

### SUMMARY

Embodiments of this application provide a data collection method and apparatus, a terminal, and a network-side device, which can trigger appropriate UE to perform data collection.

According to a first aspect, a data collection request method is provided. The method includes: A first network-side device transmits a first data collection request to a second network-side device, where information carried in the first data collection request includes at least one of the following: type indication information, indicating that a request type of the first data collection request is data collection; characteristic information of a terminal participating in data collection; a type of data that needs to be collected; a configuration for data collection; and identifier information, used for identifying a purpose of collected data.

According to a second aspect, a data collection request apparatus is provided, including: a determining module, configured to determine that data collection needs to be triggered; and a first transmitting module, configured to transmit a first data collection request to a second network-side device, where information carried in the first data collection request includes at least one of the following: type indication information, indicating that a request type of the first data collection request is data collection; characteristic information of a terminal participating in data collection; a type of data that needs to be collected; a configuration for data collection; and identifier information, used for identifying a purpose of collected data.

According to a third aspect, a data collection request method is provided, including: A second network-side device receives a first data collection request transmitted by a first network-side device. The second network-side device transmits a second data collection request to a target base station based on the first data collection request, where information carried in the second data collection request includes at least one of the following: type indication information, indicating that a request type of the second data collection request is indication information of data collection; characteristic information of a terminal participating in data collection; a type of data that needs to be collected; a configuration for data collection; and identifier information, used for identifying a purpose of collected data.

According to a fourth aspect, a data collection request apparatus is provided, including: a second receiving module, configured to receive a first data collection request transmitted by a first network-side device; and a second transmitting module, configured to transmit a second data collection request to a target base station based on the first data collection request, where information carried in the second data collection request includes at least one of the following: type indication information, indicating that a request type of the second data collection request is indication information of data collection; characteristic information of a terminal participating in data collection; a type of data that needs to be collected; a configuration for data collection; and identifier information, used for identifying a purpose of collected data.

According to a fifth aspect, a data collection notification method is provided, including: A target base station receives a data collection request. The target base station transmits configuration information, where the configuration information includes fifth indication information, and the fifth indication information indicates a terminal participating in data collection, where information carried in the data collection request includes at least one of the following: type indication information, indicating that a request type of the data collection request is data collection; characteristic information of a terminal participating in data collection; a type of data that needs to be collected; a configuration for data collection; and identifier information, used for identifying a purpose of collected data.

According to a sixth aspect, a data collection notification apparatus is provided, including: a third receiving module, configured to receive a first data collection request; a third transmitting module, configured to transmit configuration information, where the configuration information includes fifth indication information, and the fifth indication information indicates a terminal participating in data collection, where information carried in the data collection request includes at least one of the following: type indication information, indicating that a request type of the data collection request is data collection; characteristic information of a terminal participating in data collection; a type of data that needs to be collected; a configuration for data collection; and identifier information, used for identifying a purpose of collected data.

According to a seventh aspect, a data collection method is provided, including: A target terminal receives configuration information of data collection transmitted by a target base station, where the configuration information includes fifth indication information, and the fifth indication information indicates a terminal participating in data collection. The target terminal determines, based on the configuration information, to participate in data collection, and performs data collection.

According to an eighth aspect, a data collection apparatus is provided, including: a fourth receiving module, configured to receive configuration information of data collection transmitted by a target base station, where the configuration information includes fifth indication information, and the fifth indication information indicates a terminal participating in data collection; and a collection module, configured to: determine, based on the configuration information, to participate in data collection, and perform data collection.

According to a ninth aspect, a network-side device is provided. The network-side device includes a processor and a memory. The memory stores a program or instructions executable on the processor. The program or instructions, when being executed by the processor, implement the steps of the method according to the first aspect, or implement the steps of the method according to the third aspect, or implement the steps of the method according to the fifth aspect.

According to a tenth aspect, a network-side device is provided, including a processor and a communication interface. The processor is configured to implement the steps of the method according to the first aspect, or implement the steps of the method according to the third aspect, or implement the steps of the method according to the fifth aspect. The communication interface is configured to communicate with an external device.

According to an eleventh aspect, a terminal is provided. The terminal includes a processor and a memory. The memory stores a program or instructions executable on the processor. The program or instructions, when being executed by the processor, implement the steps of the method according to the seventh aspect.

According to a twelfth aspect, a terminal is provided, including a processor and a communication interface. The processor is configured to implement the steps of the method according to the seventh aspect. The communication interface is configured to communicate with an external device.

According to a thirteenth aspect, a data collection system is provided, including: a terminal and a network-side device. The terminal may be configured to perform the steps of the method according to the seventh aspect. The network-side device may be configured to perform the steps of the method according to the first aspect, or perform the steps of the method according to the third aspect, or perform the steps of the method according to the fifth aspect.

According to a fourteenth aspect, a computer storage medium is provided. The computer storage medium stores a program or instructions. The program or instructions, when being executed by a processor, implement the steps of the method according to the first aspect, implement the steps of the method according to the third aspect, or implement the steps of the method according to the fifth aspect, or implement the steps of the method according to the seventh aspect.

According to a fifteenth aspect, a chip is provided. The chip includes a processor and a communication interface. The communication interface is coupled to the processor. The processor is configured to run a program or instructions to implement the steps of the method according to the first aspect, or implement the steps of the method according to the third aspect, or implement the steps of the method according to the fifth aspect, or implement the steps of the method according to the seventh aspect.

According to a sixteenth aspect, a computer program/program product is provided. The computer program/program product is stored in a storage medium. The computer program/program product, when being executed by at least one processor, implements the steps of the method according to the first aspect, or implements the steps of the method according to the third aspect, or implements the steps of the method according to the fifth aspect, or implements the steps of the method according to the seventh aspect.

In the embodiments of this application, a first network-side device transmits a first data collection request to a second network-side device, so that a terminal participating in data collection may be triggered through the second network-side device to perform data collection.

### BRIEF DESCRIPTION OF THE DRAWINGS

FIG. 1 is a block diagram of a wireless communication system to which embodiments of this application are applicable;
FIG. 2 is a schematic diagram of a network architecture according to an embodiment of this application;
FIG. 3 is a schematic flowchart of a data collection request method according to an embodiment of this application;
FIG. 4 is a flowchart of another data collection request method according to an embodiment of this application;
FIG. 5 is a flowchart of a data collection notification method according to an embodiment of this application;
FIG. 6 is a flowchart of a data collection method according to an embodiment of this application;
FIG. 7 is a schematic structural diagram of a data collection request apparatus according to an embodiment of this application;
FIG. 8 is a schematic structural diagram of another data collection request apparatus according to an embodiment of this application;
FIG. 9 is a schematic structural diagram of a data collection notification apparatus according to an embodiment of this application;
FIG. 10 is a schematic structural diagram of a data collection apparatus according to an embodiment of this application;
FIG. 11 is a schematic structural diagram of a communication device according to an embodiment of this application;
FIG. 12 is a schematic diagram of a hardware structure of a terminal according to an embodiment of this application;
FIG. 13 is a schematic diagram of a hardware structure of a network-side device according to an embodiment of this application; and
FIG. 14 is a schematic diagram of a hardware structure of another network-side device according to an embodiment of this application.

### DETAILED DESCRIPTION

The technical solutions in embodiments of this application are clearly described in the following with reference to the accompanying drawings in the embodiments of this application. Apparently, the described embodiments are some rather than all of the embodiments of this application. All other embodiments obtained by persons of ordinary skill in the art based on the embodiments of this application fall within the scope of protection of this application.

The specification and claims of this application, and terms "first" and "second" are used to distinguish similar objects, but are not used to describe a specific sequence or order. It should be understood that the terms so used are interchangeable, where appropriate, so that embodiments of this application can be implemented in an order other than those illustrated or described herein, and that the objects distinguished by "first" and "second" are generally of one type and do not limit the number of objects. For example, one or more first objects may be provided. In addition, "and/or" in the description and the claims means at least one of the connected objects. The character "/" in this specification generally indicates an "or" relationship between the associated objects.

It should be noted that the technologies described in the embodiments of this application are not limited to being used in a long term evolution (Long Term Evolution, LTE)/LTE-advanced (LTE-Advanced, LTE-A) system, and may further be used in another wireless communication system, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and another system. The terms "system" and "network" in the embodiments of this application are often used interchangeably, and the described technologies may be used in the systems and radio technologies described above, and may be used in other systems and radio technologies. The following description describes a new radio (New Radio, NR) system as an example, and NR terms are used in most of the descriptions below. However, these technologies may also be applied to applications such as a 6^{th} generation (6^{th} Generation, 6G) communication system other than an NR system application.

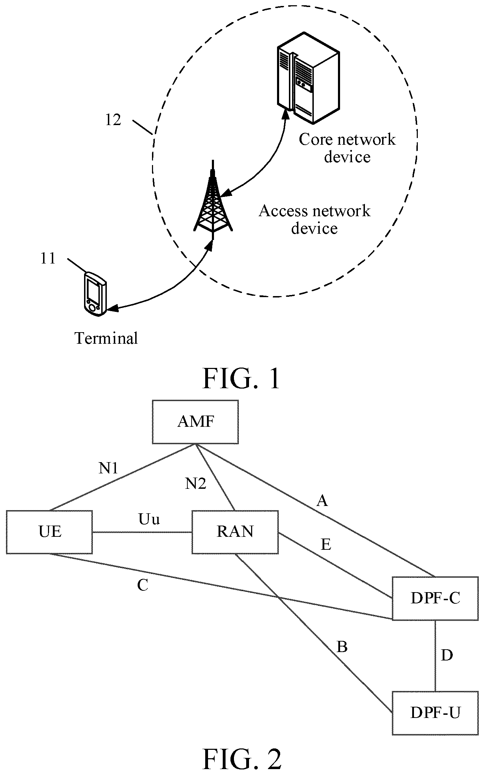

FIG. 1 is a block diagram of a wireless communication system to which embodiments of this application are applicable. The wireless communication system includes a terminal 11 and a network-side device 12. The terminal 11 may be a terminal-side device, for example, a mobile phone, a tablet personal computer (Tablet Personal Computer), a laptop computer (Laptop Computer) or referred to as a notebook computer, a personal digital assistant (Personal Digital Assistant, PDA), a handheld computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), smart home (home devices such as a refrigerator, a television, a washing machine, furniture, and the like with wireless communication functions), a video game console, a personal computer (personal computer, PC), or such as an automated teller machine, a self-service machine, or the like. The wearable device includes a smart watch, a smart band, smart earphones, smart glasses, smart jewelry (a smart bracelet, a smart hand bangle, a smart ring, a smart necklace, a smart ankle bangle, a smart anklet, or the like), a smart wristband, smart clothing, and the like. It needs to be noted that, in the embodiments of this application, a specific type of the terminal 11 is not limited. The network-side device 12 may include an access network device and/or a core network device. The access network device 12 may also be referred to as a radio access network device, a radio access network (Radio Access Network, RAN), a radio access network function or a radio access network unit. The access network device 12 may include a base station, a wireless local area network (Wireless Local Area Network, WLAN) access point, a Wireless Fidelity (Wireless Fidelity, Wi-Fi) node, and the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmitting receiving point (Transmitting Receiving Point, TRP), or another appropriate term in the field. Provided that the same technical effects are achieved, the base station is not limited to a specific technical term. It needs to be noted that, in the embodiments of this application, only a base station in an NR system is used as an example for description, and a specific type of the base station is not limited. The core network device may include, but is not limited to, at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It needs to be noted that, in the embodiments of this application, only a core network device in an NR system is used as an example for description, and a specific type of the core network device is not limited.

FIG. 2 is a schematic diagram of a network architecture according to an embodiment of this application. As shown in FIG. 2, in the embodiments of this application, two new logic network nodes, namely, a data plane function-control part (Data Plane Function-Control, DPF-C) and a data plane function-user part (Data Plane Function-User, DPF-U), are introduced. The functions of the two logic nodes DPF-C and DPF-U are to assist in selecting UE that is to participate in data collection and establishing a connection to the UE participating in data collection to receive collected data reported by the UE. The functions of the DPF-C and the DPF-U may be implemented in one physical node, and the functions of the DPF-C and the DPF-U may be implemented through an existing physical node.

As shown in FIG. 2, in the embodiments of this application, five related interfaces are further introduced:
(1) an interface between the DPF-C and a core network service data control plane node (for example, an AMF): an A interface;
(2) an interface between the DPF-U and a radio access network (Radio Access Network, RAN node) (for example, a base station): a B interface;
(3) an interface between the UE and the DPF-C: a C interface;
(4) an interface between the DPF-C and the DPF-U: a D interface; and
(5) an interface between the RAN and the DPF-C: an E interface.

When requiring that UE perform data collection, a core network notifies a base station of characteristic information of UE that needs to be selected. The characteristic information includes, but is not limited to, a position (including a public land mobile network (Public Land Mobile Network, PLMN), a cell, a tracking area (Tracking Area, this application), an access network notification area (RAN-based Notification Area, RNA), a base station), a capability, an intention of a user to participate in collection of data of a specific type, and a quantity of UEs that are required; a specific data type (for example, a type related to quality of coverage, quality of service, or the like); and a collection period, a data reporting period, and the like. Optionally, the DPF-C may notify the AMF, and then the AMF notifies the base station.

Next, a cell in a specified area transmits system information based on configuration information transmitted by the core network. UE with a data collection (DP) capability reads the system information. The system information indicates a characteristic of UE that is invited to participate in data plane collection, and UE matches the characteristic to determine whether the UE is to participate in data plane collection.

Alternatively, a cell in a specified area initiates group paging (an identifier (Identifier, ID) of a paging group is similar to a TMGI-based identifier, and the ID of the group may be assigned based on a type of UE during subscription of the UE). UE receives configuration information based on the group paging, and determines whether the UE is to participate in data plane collection.

Finally, UE participating in collection establishes a connection to a DPF. The connection to the DPF is established based on a DP UE ID to conceal a mapping relationship between CP UE ID and the DP UE ID.

The data collection solutions according to the embodiments of this application are described below in detail with reference to the accompanying drawings through some embodiments and application scenarios thereof.

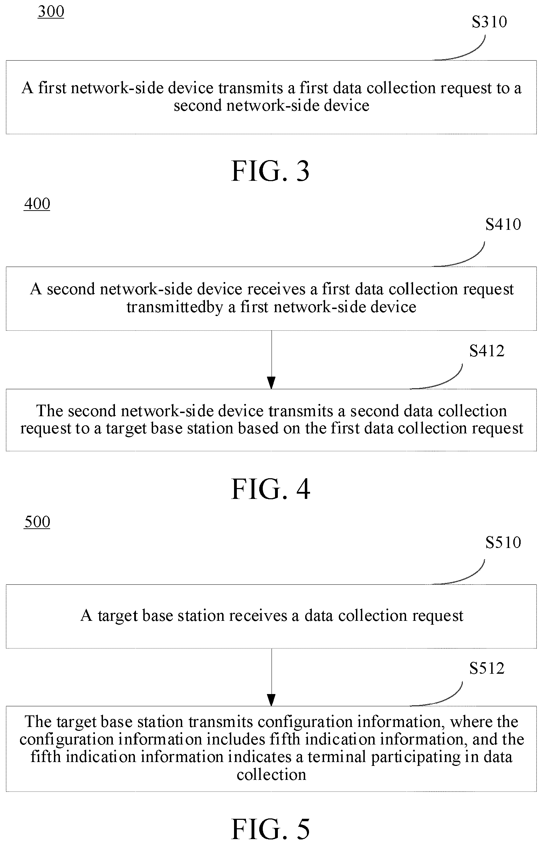

FIG. 3 is a schematic flowchart of a data collection request method according to an embodiment of this application. The method 300 may be performed by a first network-side device. In other words, the method may be performed by software or hardware installed on the first network-side device. As shown in FIG. 3, the method may include the following step.

S310: The first network-side device transmits a first data collection request to a second network-side device.

Information carried in the first data collection request includes at least one of the following:
(1) Type indication information, indicating that a request type of the first data collection request is data collection.
(2) Characteristic information of a terminal participating in data collection.
(3) A type of data that needs to be collected, to be specific, what type of data needs to be collected. For example, the type is data related to quality of coverage, data related to quality of service, or the like.
(4) A configuration for data collection, for example, a period of data collection, or a data reporting period.
(5) Identifier information, used for identifying a purpose of collected data. The first network-side device may trigger the terminal to perform data collection for various purposes. To enable the first network-side device to distinguish, when receiving collected data reported by the terminal, a purpose of the collected data, the first network-side device may add an identifier to the first data collection request. When the terminal reports collected data, the collected data may carry the identifier, to enable the first network-side device to determine a purpose of the data collected by the terminal. For example, a network-side device separately configures that UE collects two types of data: quality of signal data (i.e., data related to quality of coverage) and QoS data (i.e., data related to quality of service). Identifiers of the two types of data are respectively 1 and 2. If reported data of UE carries the identifier 1, the network-side device may learn that the collected data is used for evaluating quality of signal. If the identifier 2 is carried, the network-side device may learn that the collected data is used for evaluating QoS.

In a possible implementation, the characteristic information of the terminal may include at least one of the following:
(1) First indication information, indicating an area in which the terminal is located. In other words, the first indication information indicates an area in which the terminal participating in data collection is located. To be specific, the terminal in the area indicated by the first indication information participates in data collection. The first indication information may be a logic identifier included in the area. For example, the first indication information may include one or more identifiers as follows: a public land mobile network (Public Land Mobile Network, PLMN), a cell (cell), a tracking area (Tracking Area, TA), an RNA, a base station.
(2) Second indication information, indicating a capability that the terminal needs to have. In other words, the second indication information indicates a capability that the terminal participating in data collection needs to have, and a terminal having the capability indicated by the second indication information may participate in data collection.
(3) Third indication information, indicating an intention of the terminal to participate in collection of data of a target type. In other words, the third indication information indicates that a terminal that is to participate in data collection needs to have an intention to participate in the collection of the data of the target type. For example, subscription information of the terminal allows the collection of the data of the corresponding target type.
(4) Fourth indication information, indicating a quantity of terminals that need to participate in data collection.

In the embodiments of this application, the first network-side device may determine that data collection needs to be initiated, to perform Step S310, or the first network-side device may receive information from another node and the information triggers data collection, to perform Step S310. Therefore, in a possible implementation, the method may further include, before S310: receiving, by the first network-side device, trigger information, where the trigger information indicates to trigger data collection.

In the embodiments of this application, to enable the first network-side device to learn whether the second network-side device receives and/or accepts the first data collection request, the second network-side device may further return feedback information to the first network-side device after receiving the first data collection request. Therefore, in a possible implementation, the method may further include, after S310: receiving, by the first network-side device, first feedback information transmitted by the second network-side device, where the first feedback information indicates at least one of the following: the first data collection request is successfully received; the first data collection request is accepted; and the first data collection request is rejected. For example, the first feedback information may indicate that the first data collection request is successfully received but the first data collection request is rejected, or the first feedback information may indicate that the first data collection request is rejected, or the first feedback information may indicate that the first data collection request is accepted.

In a possible implementation, if the first data collection request is rejected, the first network-side device may re-initiate a data collection request process. Therefore, the method may further include, after the first network-side device transmits the first data collection request to the second network-side device: in a case that the first feedback information indicates that the first data collection request is rejected, after the first network-side device transmits the first data collection request, re-triggering, after waiting for a first preset time period, the transmitting of the first data collection request; or in a case that the first feedback information indicates that the first data collection request is rejected, after the first network-side device receives the first feedback information, re-triggering, after waiting for a second preset time period, the transmitting of the first data collection request.

In other words, the first network-side device may start timing after receiving the first data collection request, and if receiving the first feedback information indicating that the first data collection request is rejected, re-triggers the transmitting of the first data collection request after the timing reaches the first preset time period. Alternatively, the first network-side device may start timing after receiving the first feedback information indicating that the first data collection request is rejected, and re-triggers the transmitting of the first data collection request after the timing reaches the second preset time period.

In another possible implementation, the first network-side device may fail to receive the first feedback information. For example, the first data collection request is lost and fails to reach the second network-side device, or the first data collection request reaches the second network-side device, but the first feedback information transmitted by the second network-side device fails to reach the second network-side device. In this case, the first network-side device may re-trigger the transmitting of the first data collection request. Therefore, in the possible implementation, the method may further include, after the first network-side device transmits the first data collection request to the second network-side device: in a case that the first feedback information is not received within a third preset time period after the first data collection request is transmitted, after the first network-side device transmits the first data collection request, re-triggering, after waiting for a first preset time period, the transmitting of the first data collection request.

In the possible implementations, after triggering the transmitting of the first data collection request, the first network-side device may re-transmit the first data collection request. A parameter carried in the first data collection request may be the same as or different from a parameter carried in the first data collection request transmitted a previous time period. This may be specifically determined according to an actual application, and is not limited in the embodiments of this application.

In the possible implementations, the first preset time period, the second preset time period, and the third preset time period may be determined by the first network-side device according to an actual application, and are not specifically limited in the embodiments of this application.

In a possible implementation, the method may further include, after S310: receiving, by the first network-side device, a data collection report reported by a target terminal, where the data collection report includes data collected by the target terminal.

For example, after the first network-side device transmits the first data collection request to the second network-side device, assuming that the second network-side device is an AMF, the AMF may request a target base station to transmit a notification of configuration information of data collection. After receiving the notification, a terminal that needs to participate in data collection may perform data collection, and establish a connection to the first network-side device to report the data collection report to the first network-side device.

Optionally, the receiving, by the first network-side device, a data collection report reported by a target terminal includes: receiving, by the first network-side device, a data collection report reported by the target terminal by using a first target identifier, where the first target identifier is different from a second target identifier, and the second target identifier includes an identifier assigned by a network side to the target terminal. In the possible implementation, the target terminal uses an identifier other than the identifier assigned by the network side to the target terminal to report the data collection report, to keep the network side from acquiring the identity of the target terminal, thereby protecting the privacy of the target terminal.

In a possible implementation, the data collection report may further include configuration information, and the configuration information includes at least one of the following:
characteristic information of a terminal participating in data collection;
a type of data that needs to be collected;
a configuration for data collection; and
identifier information, used for identifying a purpose of collected data.

In the possible implementation, the data collection report includes configuration information, to enable the first network-side device to learn that collected data in the received data collection report is for the first data collection request, making it convenient for the first network-side device to use the collected data.

In the embodiments of this application, the first network-side device may be the DPF-C in FIG. 2, and the second network-side device may be a core network node, for example, an AMF. Alternatively, the second network-side device may be a RAN node, for example, a base station.

An example in which the first network-side device is a DPF-C is used. The data collection request method provided in the embodiments of this application may include the following steps.

Step 1: The DPF-C receives information of another node, where the information triggers a subsequent data collection process. The step is optional. For example, the DPF-C may initiate the data collection process.

Step 2: The DPF-C initiates the data collection process to a core network service data control plane node (for example, an AMF). For example, the DPF-C transmits a request message to an AMF, where the request message includes one or more of the following information:
(1) a type of a request: data collection;
(2) a characteristic of UE that participates in data collection: UE being located in a specific collection area (a logic identifier included in the collection area, including a logic identifier of one or more of the following: a PLMN, a cell, a TA, an RNA, a base station), a capability that UE needs to have, an intention of a user to participate in collection of data of a specific type (for example, whether collection of data of a corresponding type is allowed in subscription information), and a quantity of UEs that need to participate;
(3) a type of data collection, to be specific, what type of data needs to be collected, for example, data related to quality of coverage, or data related to quality of service;
(4) a configuration for data collection, for example, a collection period, or a data reporting period; and
(5) identifier information, used for identifying a purpose of collected data.

Step 3: The DPF-C receives feedback information transmitted by the core network service data control plane node. The step is an optional step.

The feedback information is used for at least one of the following *purposes:*
(1) a data collection request is accepted (i.e., the AMF triggers the UE to perform data collection and reporting);
(2) a data collection request is rejected (i.e., the AMF does not trigger the UE to perform data collection and reporting); and
(3) a data collection request is successfully received.

If data collection is rejected, the DPF-C may re-initiate a request process. In a preferred implementation, after waiting for a preset time period, the DPF-C re-initiates the request process. A start time point of the preset time period is the time point of transmitting a request, or may be the time point of receiving a feedback.

If the DPF-C receives no feedback information within the preset time period, the DPF-C may re-initiate the request process. In a preferred implementation, after waiting for a preset time period, the DPF-C re-initiates the request process. A start time point of the preset time is the time point of transmitting a request, or may be the time point of receiving a feedback.

Through the foregoing technical solution provided in the embodiments of this application, the first network-side device may initiate a data collection process to the second network-side device, and transmits characteristic information of a terminal, a type of data that needs to be collected, a configuration for data collection, and other information to the second network-side device, to trigger the terminal to perform data collection.

FIG. 4 is a schematic flowchart of another data collection request method according to an embodiment of this application. The method 400 may be performed by a second network-side device. In other words, the method may be performed by software or hardware installed on the second network-side device. In the embodiments of this application, the second network-side device includes, but is not limited to, a core network node, for example, an AMF. As shown in FIG. 4, the method may include the following steps.

S410: The second network-side device receives a first data collection request transmitted by a first network-side device.

The first network-side device may transmit the first data collection request in the manner in the foregoing method 300. For details, refer to the description in the foregoing method 300. Details are not described herein again.

For example, a core network service data control plane node (for example, the AMF) receives a data collection request transmitted by a DPF-C.

In a possible implementation, after receiving the first data collection request, the second network-side device may transmit feedback information to the first network-side device, to enable the first network-side device to learn a status of receiving the first data collection request by the second network-side device. Therefore, in the possible implementation, the method may further include: after S410, transmitting, by the second network-side device, first feedback information to the first network-side device, where the first feedback information indicates at least one of the following:
(1) The second network-side device has received the first data collection request.
(2) The second network-side device accepts the first data collection request. For example, the second network-side device triggers a terminal to perform data collection and reporting.
(3) The second network-side device rejects the first data collection request. For example, the second network-side device does not trigger the terminal to perform data collection and reporting.

S412: The second network-side device transmits a second data collection request to a target base station based on the first data collection request.

Information carried in the second data collection request includes at least one of the following:
(1) Type indication information, indicating that a request type of the second data collection request is data collection.
(2) Characteristic information of a terminal participating in data collection.
(3) A type of data that needs to be collected, to be specific, what type of data needs to be collected. For example, the type is data related to quality of coverage, data related to quality of service, or the like.
(4) A configuration for data collection, for example, a period of data collection, or a data reporting period.
(5) Identifier information, used for identifying a purpose of collected data. A network side may trigger the terminal to perform data collection for various purposes. To enable the network side to distinguish, when receiving collected data reported by the terminal, a purpose of the collected data, the second network-side device may add an identifier to the second data collection request. When the terminal reports collected data, the collected data may carry the identifier, to enable the network side to determine a purpose of the data collected by the terminal. For example, the network side separately configures that UE collects two types of data: quality of signal data and QoS data. Identifiers of the two types of data are respectively 1 and 2. If reported data of UE carries the identifier 1, the network side may learn that the collected data is used for evaluating quality of signal. If the identifier 2 is carried, the network-side device may learn that the collected data is used for evaluating QoS.

In a possible implementation, the characteristic information of the terminal may include at least one of the following:
(1) First indication information, indicating an area in which the terminal is located. In other words, the first indication information indicates an area in which the terminal participating in data collection is located. To be specific, the terminal in the area indicated by the first indication information participates in data collection. The first indication information may be a logic identifier included in the area. For example, the first indication information may include one or more identifiers as follows: a public land mobile network (Public Land Mobile Network, PLMN), a cell (cell), a tracking area (Tracking Area, TA), an RNA, a base station.
(2) Second indication information, indicating a capability that the terminal needs to have. In other words, the second indication information indicates a capability that the terminal participating in data collection needs to have, and a terminal having the capability indicated by the second indication information may participate in data collection.
(3) Third indication information, indicating an intention of the terminal to participate in collection of data of a target type. In other words, the third indication information indicates that a terminal that is to participate in data collection needs to have an intention to participate in the collection of the data of the target type. For example, subscription information of the terminal allows the collection of the data of the corresponding target type.
(4) Fourth indication information, indicating a quantity of terminals that need to participate in data collection.

In the embodiments of this application, all terminals may not need to perform data collection. Before S412, the second network-side device may first determine a target base station. Therefore, in a possible implementation, the method may further include, before S412: determining, by the second network-side device based on the first data collection request, a target base station participating in data collection. For example, if the first indication information in the characteristic information of the terminal participating in data collection in the first data collection request is a logic identifier of a base station, the second network-side device determines that the target base station is the base station indicated by the first indication information.

In a possible implementation, based on the first data collection request, the determining, by the second network-side device based on the first data collection request, a target base station participating in data collection may include: determining, by the second network-side device, a target area based on the first data collection request; and determining, by the second network-side device based on the target area and network deployment information, a target base station covering all or a part of the target area. For example, if the first indication information in the characteristic information of the terminal participating in data collection in the first data collection request is a logic identifier of a PLMN or a logic identifier of a cell or a logic identifier of a TA, the second network-side device may determine the target area based on the first indication information. For example, an area covered by the PLMN, the cell or the TA indicated by the first indication information is the target area, and then it may be determined, based on a network deployment, that a base station covering a part of the target area is the target base station.

In a possible implementation, the target base station may further feed back whether the second data collection request is received and whether the second data collection request is accepted, to enable the second network-side device to learn whether the second data collection request is received and whether the second data collection request is accepted. Therefore, in the possible implementation, the method may further include, after the second network-side device transmits the second data collection request to the target base station: receiving, by the second network-side device, second feedback information transmitted by the target base station. The second feedback information may indicate at least one of the following:
(1) The second data collection request is successfully received.
(2) The second data collection request is accepted. For example, the target base station triggers the UE to perform data collection and reporting.
(3) The second data collection request is rejected. For example, the target base station does not trigger the UE to perform data collection and reporting.

The method 400 provided in the embodiments of this application is described below by using an example in which the first network-side device may be the DPF-C in FIG. 2 and the second network-side device may be a core network node, for example, an AMF.

First, the core network service data control plane node (for example, the AMF) receives the data collection request transmitted by the DPF-C.

Optionally, the AMF may feed back that the data collection request is accepted, rejected, or received.

Next, the AMF transmits data collection-related information to a related base station based on the data collection request transmitted by the DPF-C.

The data collection-related information may include one or more of the following:
(1) a type of a request: data collection;
(2) a characteristic of UE that participates in data collection: UE being located in a specific collection area (a logic identifier included in the collection area, including a logic identifier of one or more of the following: a PLMN, a cell, a TA, an RNA, a base station), a capability that UE needs to have, an intention of a user to participate in collection of data of a specific type (for example, whether collection of data of a corresponding type is allowed in subscription information), and a quantity of UEs that need to participate;
(3) a type of data collection, to be specific, what type of data needs to be collected, for example, data related to quality of coverage, or data related to quality of service;
(4) a configuration for data collection, for example, a collection period, or a data reporting period; and
(5) Identifier information, used for identifying a purpose of collected data.

The related base station may be a base station that is determined by the AMF based on a data collection area and the network deployment information and that covers all or a part of the collection area.

Optionally, the AMF may further receive feedback information transmitted by the related base station. The feedback information is used for at least one of the following *purposes:*
(1) the data collection request is accepted (i.e., the base station triggers the UE to perform data collection and reporting);
(2) the data collection request is rejected (i.e., the base station does not trigger the UE to perform data collection and reporting); and
(3) the data collection request is successfully received.

Through the method 400 provided in the embodiments of this application, in a case that the second network-side device receives a data collection request transmitted by the first network-side device, the second network-side device transmits the data collection request to the target base station, so that the target base station can be triggered to notify the terminal to perform data collection.

FIG. 5 is a schematic flowchart of another data collection notification method according to an embodiment of this application. The method 500 may be performed by a base station. In other words, the method may be performed by software or hardware installed on the base station. As shown in FIG. 5, the method may include the following steps.

S510: A target base station receives a data collection request.

In the embodiments of this application, the data collection request received by the target base station may be the first data collection request transmitted by the first network-side device in the method 300, or may be the second data collection request transmitted by the second network-side device in the method 400.

Information carried in the data collection request includes at least one of the following:
(1) Type indication information, indicating that a request type of the second data collection request is data collection.
(2) Characteristic information of a terminal participating in data collection.
(3) A type of data that needs to be collected, to be specific, what type of data needs to be collected. For example, the type is data related to quality of coverage, data related to quality of service, or the like.
(4) A configuration for data collection, for example, a period of data collection, or a data reporting period.
(5) Identifier information, used for identifying a purpose of collected data. A network side may trigger the terminal to perform data collection for various purposes. To enable the network side to distinguish, when receiving collected data reported by the terminal, a purpose of the collected data, an identifier may be carried in the second data collection request. When the terminal reports collected data, the collected data may carry the identifier, to enable the network side to determine a purpose of the data collected by the terminal. For example, the network side separately configures that UE collects two types of data: quality of signal data and QoS data. Identifiers of the two types of data are respectively 1 and 2. If reported data of UE carries the identifier 1, the network side may learn that the collected data is used for evaluating quality of signal. If the identifier 2 is carried, the network-side device may learn that the collected data is used for evaluating QoS.

In a possible implementation, the characteristic information of the terminal may include at least one of the following:
(1) First indication information, indicating an area in which the terminal is located. In other words, the first indication information indicates an area in which the terminal participating in data collection is located. To be specific, the terminal in the area indicated by the first indication information participates in data collection. The first indication information may be a logic identifier included in the area. For example, the first indication information may include one or more identifiers as follows: a public land mobile network (Public Land Mobile Network, PLMN), a cell (cell), a tracking area (Tracking Area, TA), an RNA, a base station.
(2) Second indication information, indicating a capability that the terminal needs to have. In other words, the second indication information indicates a capability that the terminal participating in data collection needs to have, and a terminal having the capability indicated by the second indication information may participate in data collection.
(3) Third indication information, indicating an intention of the terminal to participate in collection of data of a target type. In other words, the third indication information indicates that a terminal that is to participate in data collection needs to have an intention to participate in the collection of the data of the target type. For example, subscription information of the terminal allows the collection of the data of the corresponding target type.
(4) Fourth indication information, indicating a quantity of terminals that need to participate in data collection.

In a possible implementation, after receiving the data collection request, the target base station may further transmit feedback information to a transmitter (for example, the first network-side device or the second network-side device) of the data collection request, where the feedback information indicates at least one of the following:
(1) The target base station has received the data collection request.
(2) The target base station accepts the data collection request. To be specific, the target base station triggers the UE to perform data collection and reporting.
(3) The target base station rejects the data collection request. To be specific, the target base station does not trigger the UE to perform data collection and reporting.

S512: The target base station transmits configuration information, where the configuration information includes fifth indication information, and the fifth indication information indicates a terminal participating in data collection.

In a possible implementation of the embodiments of this application, the target base station may transmit a broadcast message, where the broadcast message includes the configuration information. For example, the target base station transmits system information, where the system information is related to data collection.

In another possible implementation of the embodiments of this application, the target base station may transmit a multicast message, where the multicast message includes the configuration information and a multicast scheduling identifier. For example, the target base station initiates group paging. An ID of the group paging may be assigned based on a type of UE during subscription of the UE.

The fifth indication information may include characteristic information of a terminal participating in data collection, for example, a specific collection area (for example, a logic identifier included in the collection area, including a logic identifier of one or more of the following: a PLMN, a cell, a TA, an RNA, a base station) that UE is located in, a capability that UE needs to have, an intention of a user to participate in collection of data of a specific type (for example, whether collection of data of a corresponding type is allowed in subscription information), and a quantity of UEs that need to participate.

In a possible implementation, the configuration information may further include at least one of the following:
(1) a type of data that needs to be collected, to be specific, what type of data needs to be collected, for example, data related to quality of coverage, or data related to quality of service; and
(2) a configuration for data collection, for example, a collection period, or a data reporting period.

Through the technical solution provided in the embodiments of this application, in a case that the target base station receives a data collection request, the target base station may transmit configuration information of data collection, so that a terminal having a data collection capability can be triggered to perform data collection.

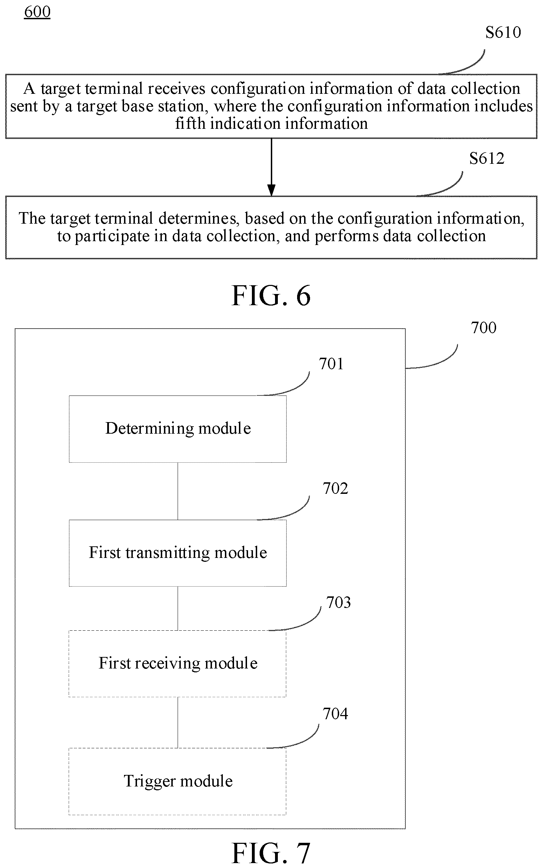

FIG. 6 is a schematic flowchart of a data collection method according to an embodiment of this application. The method 600 may be performed by a terminal. In other words, the method may be performed by software or hardware installed on the terminal. As shown in FIG. 6, the method may include the following steps.

Step S610: A target terminal receives configuration information of data collection transmitted by a target base station, where the configuration information includes fifth indication information, and the fifth indication information indicates a terminal participating in data collection.

In the embodiments of this application, the target base station may transmit the configuration information by using the method 500. For details, refer to the description in the method 500. Details are not described herein again.

In a possible implementation of the embodiments of this application, the target base station may transmit a broadcast message, where the broadcast message includes the configuration information. For example, the target base station transmits system information, where the system information is related to data collection. Therefore, in the possible implementation, S610 may include: receiving, by the target terminal, a broadcast message transmitted by the target base station, where the broadcast message includes the configuration information.

For example, the target terminal having a data collection capability reads system information transmitted by a base station, and acquires the configuration information from the system information. Optionally, before reading the system information, the target terminal optionally reads a paging message, and learns, through a system information change indication in the paging message, that new system information is transmitted, to acquire the new system information.

In another possible implementation of the embodiments of this application, the target base station may transmit a multicast message, where the multicast message includes the configuration information and a multicast scheduling identifier (ID). For example, the target base station initiates group paging. An ID of the group paging may be assigned based on a type of UE during subscription of the UE. Therefore, in the possible implementation, Step S610 may include: receiving, by the target terminal, a multicast message scheduled by a target multicast scheduling identifier, where the target multicast scheduling identifier is a multicast scheduling identifier that the target terminal needs to monitor, and the multicast message includes the configuration information and the target multicast scheduling identifier.

For example, the base station may initiate group paging, and the target terminal obtains the configuration information by monitoring multicast information scheduled by a multicast scheduling ID. As an optimized implementation, an AMF or the base station may assign, to UE based on subscription information of the UE, a multicast scheduling ID that needs to be monitored. As another optimized implementation, the target terminal may obtain, from user subscription information or information stored in a universal subscriber identity module (Universal Subscriber Identity Module, USIM) card, a multicast scheduling ID that needs to be monitored.

Step S612: The target terminal determines, based on the configuration information, to participate in data collection, and performs data collection.

For example, if the target terminal matches a terminal characteristic in the configuration information, the target terminal may determine to participate in data collection.

In a possible implementation, S612 may include: in a case that the target terminal determines that the fifth indication information matches a property of the target terminal, determining to participate in data collection, where the fifth indication information includes characteristic information of a terminal participating in data collection.

For example, the fifth indication information includes the characteristic information of the terminal participating in data collection. In a case that the characteristic information of the terminal includes the first indication information indicating the area in which the terminal is located, if the target terminal is located in the area indicated by the first indication information, the target terminal determines to participate in data collection.

For another example, the fifth indication information includes the characteristic information of the terminal participating in data collection. In a case that the characteristic information of the terminal includes the second indication information indicating the capability that the UE needs to have, if the target terminal has the capability indicated by the second indication information, the target terminal determines to participate in data collection.

For another example, the fifth indication information includes the characteristic information of the terminal participating in data collection. In a case that the characteristic information of the terminal includes the third indication information indicating an intention of the terminal to participate in collection of data of a target type, if the target terminal has an intention to collect the data of the target type, the target terminal determines to participate in data collection.

During actual application, the configuration information may include a plurality of pieces of characteristic information of a terminal participating in data collection. Therefore, in a possible implementation, the determining that the fifth indication information matches the property of the target terminal may include: determining, by the target terminal, that N properties of the target terminal match the fifth indication information, where N is a positive integer, M ≥ N ≥ 1, the fifth indication information includes characteristic information of a terminal participating in data collection, and M is a quantity of all characteristics included in the characteristic information.

For example, the characteristic information of a terminal participating in data collection in the configuration information includes the first indication information, the second indication information, and the third indication information, M = 3. If N = 2, the target terminal has two characteristics matching the characteristic information of a terminal participating in data collection in the configuration information, and it is determined that the fifth indication information matches the properties of the target terminal. For example, the target terminal is located in the area indicated by the first indication information and the target terminal has an intention to collect the data of the target type indicated by the third indication information, the target terminal determines to participate in data collection.

In a possible implementation, after S612, the target terminal may further report a data collection report to a network-side device, to report data collected by the target terminal. Therefore, in the possible implementation, the method may further include, after S612: reporting, by the target terminal, a data collection report to a network-side device, where the data collection report includes data collected by the target terminal, and the network-side device includes a first network-side device or a third network-side device associated with the first network-side device. The first network-side device may be the DPF-C shown in FIG. 2, and the third network-side device may be the DPF-U shown in FIG. 2. For example, the target terminal may establish a connection to the DPF-C or the DPF-U, and then report the data collection report to the DPF-C or the DPF-U.

In a possible implementation, the target terminal may report the data collection report by using a first target ID.

Optionally, the first target ID is different from a second target ID, and the second target identifier includes an identifier assigned by a network side to the target terminal. In other words, the target terminal may use a special ID different from the ID assigned by the network side to the target terminal to report the data collection report, so that the network side cannot determine the identity (for example, determine subscription information or a subscription identifier of the target terminal) of the target terminal based on the special ID. To be specific, the network side cannot determine a terminal that reported collected data is from, so that the privacy of the target terminal performing data collection can be protected.

Through the technical solution provided in the embodiments of this application, in a case that the target base station receives a data collection request, the target base station may transmit configuration information of data collection, so that a terminal having a data collection capability can be triggered to perform data collection.

The method 600 provided in the embodiments of this application is described below by using the network architecture shown in FIG. 2 as an example.

An example in which the base station transmits configuration information in a broadcast manner. The method 600 may include the following steps.

Step 1: UE having a data collection capability receives system information, where the system information is related to data collection, and the system information includes one or more of the following configuration information:
(1) a characteristic of UE that participates in data collection: UE being located in a specific collection area (a logic identifier included in the collection area, including a logic identifier of one or more of the following: a PLMN, a cell, a TA, an RNA, a base station), a capability that UE needs to have, an intention of a user to participate in collection of data of a specific type (for example, whether collection of data of a corresponding type is allowed in subscription information), and a quantity of UEs that need to participate;
(2) a type of data collection, to be specific, what type of data needs to be collected, for example, data related to quality of coverage, or data related to quality of service; and
(3) a configuration for data collection, for example, a collection period, or a data reporting period.

Before reading the system information, the UE optionally reads a paging message, and learns, through a system information change indication in the paging message, that new system information is transmitted, and the new system information is acquired.

Step 2: The UE determines, based on information obtained from the system information/broadcast message, that data collection needs to be performed.

For example, the UE determines, based on whether the system information matches an characteristic thereof, whether to participate in data collection. Optionally, when at least N characteristics match, the UE may determine to participate in data collection. M ≥ N ≥ 1. The value of N may be specified in a protocol, or may be configured in a network. M is a quantity of all related characteristics included in the system information. M = N, representing that when all data collection-related characteristics broadcast in the system information match the characteristics of the UE, the UE may perform data collection.

Step 3: After determining to perform data collection, the UE performs data collection based on a data collection configuration parameter carried in the system information.

Step 4: After obtaining collected data, the UE establishes a connection to the DPF-C or the DPF-U to report the collected data.
(1) As an optimized implementation, the UE uses a special ID to establish a connection to the DPF-C or the DPF-U.
(2) As an optimized implementation, when reporting the collected data, the UE reports data collection configuration information, making it convenient for a network (Network, NW) to determine a purpose of collected data.

As an optimized implementation, the special ID is different from an ID assigned by an AMF or a base station. To be specific, the network cannot determine the identity (subscription information or a subscription identifier) of the UE based on the special ID. To be specific, the NW does not determine UE that collected data is from, thereby protecting the privacy of the UE performing data collection.

An example in which the base station transmits configuration information in a multicast manner. The method 600 may include the following steps.

Step 1: UE having a data collection capability receives multicast information, where the multicast information is related to data collection, and the multicast information includes one or more of the following configuration information:
(1) a characteristic of UE that participates in data collection: UE being located in a specific collection area (a logic identifier included in the collection area, including a logic identifier of one or more of the following: a PLMN, a cell, a TA, an RNA, a base station), a capability that UE needs to have, an intention of a user to participate in collection of data of a specific type (for example, whether collection of data of a corresponding type is allowed in subscription information), and a quantity of UEs that need to participate;
(2) a type of data collection, to be specific, what type of data needs to be collected, for example, data related to quality of coverage, or data related to quality of service; and
(3) a configuration for data collection, for example, a collection period, or a data reporting period.

The UE obtains the configuration by monitoring multicast information scheduled by a multicast scheduling ID. As an optimized implementation, the AMF or the base station may assign, to the UE based on subscription information of the UE, the multicast scheduling ID that needs to be monitored. As an optimized implementation, the UE may obtain, from user subscription information or information stored in a USIM card, the multicast scheduling ID that needs to be monitored.

Step 2: The UE determines, based on information obtained from the multicast message, that data collection needs to be performed.

The UE determines, based on whether the multicast information matches an characteristic thereof, whether to participate in data collection. Optionally, when at least N characteristics match, the UE may determine to participate in data collection. M ≥ N ≥ 1. The value of N may be specified in a protocol, or may be configured in a network. M is a quantity of all related characteristics included in the multicast information. M = N, representing that when all data collection-related characteristics in the multicast information match the characteristics of the UE, the UE may perform data collection.

Step 3: After determining to perform data collection, the UE performs data collection based on a data collection configuration parameter carried in the multicast information.

Step 4: After obtaining collected data, the UE establishes a connection to the DPF-C or the DPF-U to report the collected data.

As an optimized implementation, the UE uses a special ID to establish a connection to the DPF-C or the DPF-U.

As an optimized implementation, when reporting the collected data, the UE reports data collection configuration information, making it convenient for NW to determine a purpose of collected data.

As an optimized implementation, the special ID is different from an ID assigned by an AMF or a base station. To be specific, the network cannot determine the identity (subscription information or a subscription identifier) of the UE based on the special ID. To be specific, the NW does not determine UE that collected data is from, thereby protecting the privacy of the UE performing data collection.

Through the method provided in the embodiments of this application, a network side notifies, through broadcasting or multicasting, a characteristic of UE required for data collection and a data collection configuration parameter. The UE determines whether to participate in data collection. After data collection, the UE reports collected data. In addition, in the technical solution provided in the embodiments of this application, the network side is allowed to perform data collection without specifying specific UE participating in data collection, and obtain collected data reported by a user, thereby avoiding leakage of user privacy.

The foregoing various methods provided in the embodiments of this application may be performed by corresponding apparatuses. The apparatuses provided in the embodiments of this application are described by using an example in which corresponding apparatuses perform corresponding methods in the embodiments of this application.

FIG. 7 is a schematic structural diagram of a data collection request apparatus according to an embodiment of this application. As shown in FIG. 7, the apparatus 700 mainly includes a determining module 701 and a first transmitting module 702.

In the embodiments of this application, the determining module 701 is configured to determine that data collection needs to be triggered. The first transmitting module 702 is configured to transmit a first data collection request to a second network-side device, where information carried in the first data collection request includes at least one of the following: type indication information, indicating that a request type of the first data collection request is data collection; characteristic information of a terminal participating in data collection; a type of data that needs to be collected; a configuration for data collection; and identifier information, used for identifying a purpose of collected data.

In a possible implementation, the characteristic information of the terminal includes at least one of the following:
first indication information, indicating an area in which the terminal is located;
second indication information, indicating a capability that the terminal needs to have;
third indication information, indicating an intention of the terminal to participate in collection of target type data; and
fourth indication information, indicating a quantity of terminals that need to participate in data collection.

In a possible implementation, as shown in FIG. 7, the apparatus may further include: a first receiving module 703, configured to receive first feedback information transmitted by the second network-side device after the first data collection request is transmitted to the second network-side device, where the first feedback information indicates at least one of the following: the first data collection request is successfully received; the first data collection request is accepted; and the first data collection request is rejected.

In a possible implementation, as shown in FIG. 7, the apparatus may further include: a trigger module 704, configured to: in a case that the first feedback information indicates that the first data collection request is rejected, after the first data collection request is transmitted, re-trigger, after waiting for a first preset time period, the transmitting of the first data collection request; or in a case that the first feedback information indicates that the first data collection request is rejected, after the first feedback information is received, re-trigger, after waiting for a second preset time period, the transmitting of the first data collection request.

In a possible implementation, the trigger module 704 is further configured to: in a case that the first feedback information is not received within a third preset time period after the first data collection request is transmitted, after the first data collection request is transmitted, re-trigger, after waiting for a first preset time period, the transmitting of the first data collection request.

In a possible implementation, the first receiving module 703 is further configured to receive a data collection report reported by a target terminal, where the data collection report includes data collected by the target terminal.

In a possible implementation, that the first receiving module 703 receives the data collection report reported by the target terminal includes: receiving a data collection report reported by the target terminal by using a first target identifier, where the first target identifier is different from a second target identifier, and the second target identifier includes an identifier assigned by a network side to the target terminal.

In a possible implementation, the data collection report further includes configuration information, and the configuration information includes at least one of the following:
characteristic information of a terminal participating in data collection;
a type of data that needs to be collected;
a configuration for data collection; and
identifier information, used for identifying a purpose of collected data.

The data collection request apparatus in the embodiments of this application may be an electronic device, for example, an electronic device with an operating system, or may be a component, for example, an integrated circuit or a chip, in an electronic device. The electronic device may be a network-side device. For example, the network-side device may include, but not limited to, the DPF-C or the DPF-U in FIG. 2.

The data collection request apparatus in the embodiments of this application can implement various processes implemented by the first network-side device in the method embodiments in FIG. 3 to FIG. 6, and the same technical effects are achieved. To avoid repetition, details are not described herein again.

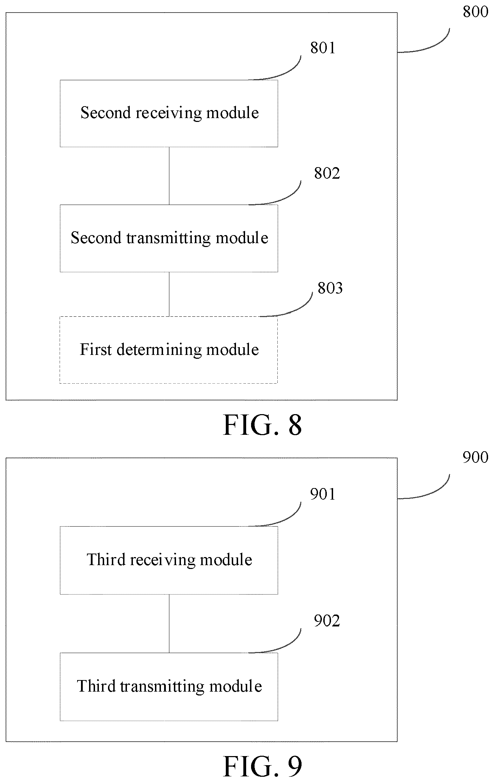

FIG. 8 is a schematic structural diagram of another data collection request apparatus according to an embodiment of this application. As shown in FIG. 8, the apparatus mainly includes a second receiving module 801 and a second transmitting module 802.

In the embodiments of this application, the second receiving module 801 is configured to receive a first data collection request transmitted by a first network-side device. The second transmitting module 802 is configured to transmit a second data collection request to a target base station based on the first data collection request, where information carried in the second data collection request includes at least one of the following: type indication information, indicating that a request type of the second data collection request is indication information of data collection; characteristic information of a terminal participating in data collection; a type of data that needs to be collected; a configuration for data collection; and identifier information, used for identifying a purpose of collected data.

In a possible implementation, the characteristic information of the terminal includes at least one of the following:
first indication information, indicating an area in which the terminal is located;
second indication information, indicating a capability that the terminal needs to have;
third indication information, indicating an intention of the terminal to participate in collection of target type data; and
fourth indication information, indicating a quantity of terminals that need to participate in data collection.

In a possible implementation, as shown in FIG. 8, the apparatus may further include: a first determining module 803, configured to: before the second data collection request is transmitted to the target base station, determine, based on the first data collection request, a target base station participating in data collection.

In a possible implementation, the first determining module 803 determines, based on the first data collection request, a target base station participating in data collection, including:
determining a target area based on the first data collection request; and
determining, based on the target area and network deployment information, a target base station covering all or a part of the target area.

In a possible implementation, the second transmitting module 802 is further configured to transmit first feedback information to the first network-side device,
the first feedback information indicates at least one of the following:
the first data collection request is received;
the first data collection request is accepted; and
the first data collection request is rejected.

In a possible implementation, the second receiving module 801 is further configured to receive second feedback information transmitted by the target base station, where
the second feedback information indicates at least one of the following:
the second data collection request is successfully received;
the second data collection request is accepted; and
the second data collection request is rejected.

The data collection request apparatus in the embodiments of this application may be an electronic device, for example, an electronic device with an operating system, or may be a component, for example, an integrated circuit or a chip, in an electronic device. The electronic device may be a network-side device. For example, the network-side device may include, but not limited to, the core network device.

The data collection request apparatus in the embodiments of this application can implement various processes implemented by the second network-side device in the method embodiments in FIG. 3 to FIG. 6, and the same technical effects are achieved. To avoid repetition, details are not described herein again.

FIG. 9 is a schematic structural diagram of another data collection notification apparatus according to an embodiment of this application. As shown in FIG. 9, the apparatus 900 mainly includes a third receiving module 901 and a third transmitting module 902.

In the embodiments of this application, the third receiving module 901 is configured to receive a first data collection request. The third transmitting module 902 is configured to transmit configuration information, where the configuration information includes fifth indication information, and the fifth indication information indicates a terminal participating in data collection, where information carried in the data collection request includes at least one of the following: type indication information, indicating that a request type of the data collection request is data collection; characteristic information of a terminal participating in data collection; a type of data that needs to be collected; a configuration for data collection; and identifier information, used for identifying a purpose of collected data.

In a possible implementation, that the third transmitting module 902 transmits the configuration information includes:
transmitting a broadcast message, where the broadcast message includes the configuration information; or
transmitting a multicast message, where the multicast message includes the configuration information and a multicast scheduling identifier.

In a possible implementation, the fifth indication information includes characteristic information of a terminal participating in data collection.

In a possible implementation, the configuration information further includes at least one of the following:
a type of data that needs to be collected;
a configuration for data collection.

In a possible implementation, the characteristic information of the terminal includes at least one of the following:
first indication information, indicating an area in which the terminal is located;
second indication information, indicating a capability that the terminal needs to have;
third indication information, indicating an intention of the terminal to participate in collection of target type data; and
fourth indication information, indicating a quantity of terminals that need to participate in data collection.

In a possible implementation, the third transmitting module 902 is further configured to transmit feedback information to a transmitter of the data collection request, where the feedback information indicates at least one of the following: the data collection request is received; the data collection request is accepted; and the data collection request is rejected.

The data collection notification apparatus in the embodiments of this application may be an electronic device, for example, an electronic device with an operating system, or may be a component, for example, an integrated circuit or a chip, in an electronic device. The electronic device may be a base station. For example, the base station may include, but not limited to, the type of the base station 12 listed above. This is not specifically limited in the embodiments of this application.

The data collection notification request apparatus in the embodiments of this application can implement various processes implemented by the base station in the method embodiments in FIG. 3 to FIG. 6, and the same technical effects are achieved. To avoid repetition, details are not described herein again.

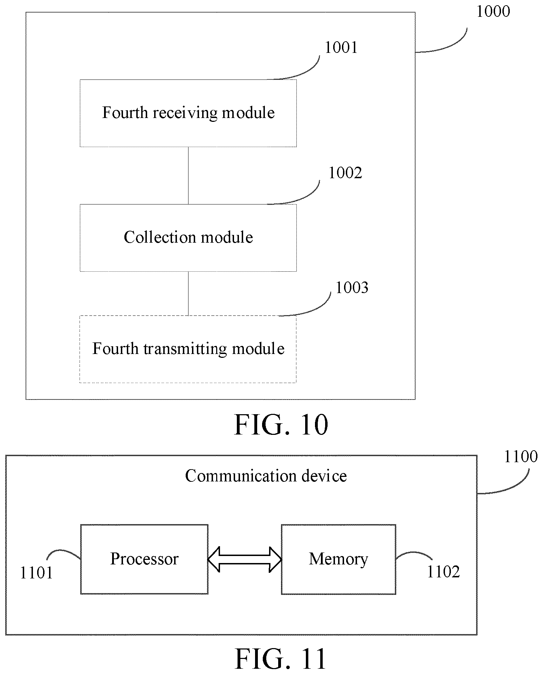

FIG. 10 is a schematic structural diagram of another data collection apparatus according to an embodiment of this application. As shown in FIG. 10, the apparatus 1000 mainly includes a fourth receiving module 1001 and a collection module 1002.

In the embodiments of this application, the fourth receiving module 1001 is configured to receive configuration information of data collection transmitted by a target base station, where the configuration information includes fifth indication information, and the fifth indication information indicates a terminal participating in data collection. The collection module 1002 is configured to: determine, based on the configuration information, to participate in data collection, and perform data collection.

In a possible implementation, that the fourth receiving module 1001 receives the configuration information of data acquisition transmitted by the target base station includes:
receiving a broadcast message transmitted by the target base station, where the broadcast message includes the configuration information; or
receiving a multicast message scheduled by a target multicast scheduling identifier, where the target multicast scheduling identifier is a multicast scheduling identifier that the terminal needs to monitor, and the multicast message includes the configuration information and the target multicast scheduling identifier.

In a possible implementation, the target multicast scheduling identifier is one of the following:
a multicast scheduling identifier that needs to be monitored and that is assigned by a second network-side device or the target base station to the target terminal based on subscription information of the target terminal;
a multicast scheduling identifier that needs to be monitored and that is acquired by the target terminal from user subscription information; and
a multicast scheduling identifier that needs to be monitored and that is acquired by the target terminal from information stored in a universal subscriber identity module USIM.

In a possible implementation, that the collection module 1002 determines, based on the configuration information, to participate in data collection includes:
in a case that it is determined that the fifth indication information matches a property of the target terminal, determining to participate in data collection, where the fifth indication information includes characteristic information of a terminal participating in data collection.

In a possible implementation, that the collection module 1002 determines that the fifth indication information matches the property of the target terminal includes:
determining that N properties of the target terminal match the fifth indication information, where N is a positive integer, M ≥ N ≥ 1, the fifth indication information includes characteristic information of a terminal participating in data collection, and M is a quantity of all characteristics included in the characteristic information.

In a possible implementation, the configuration information further includes at least one of the following:
a type of data that needs to be collected;
a configuration for data collection; and
identifier information, used for identifying a purpose of collected data.

In a possible implementation, as shown in FIG. 10, the apparatus may further include: a fourth transmitting module 1003, configured to report a data collection report to a network-side device, where the data collection report includes data collected by a target terminal, and the network-side device includes a first network-side device or a third network-side device associated with the first network-side device.

In a possible implementation, that the fourth transmitting module 1003 reports the data collection report to the network-side device includes: reporting the data collection report by using a first target identifier.

The data collection apparatus in the embodiments of this application may be an electronic device, for example, an electronic device with an operating system, or may be a component, for example, an integrated circuit or a chip, in an electronic device. The electronic device may be a terminal, or may be another device other than the terminal. For example, the terminal may include, but not limited to, the types of the terminal 11 listed above. The another device may be a server, a network attached storage (Network Attached Storage, NAS), or the like. This is not specifically limited in the embodiments of this application.

The data collection apparatus in the embodiments of this application can implement various processes implemented by the terminal in the method embodiments in FIG. 3 to FIG. 6, and the same technical effects are achieved. To avoid repetition, details are not described herein again.

Optionally, as shown in FIG. 11, embodiments of this application further provide a communication device 1100, including a processor 1101 and a memory 1102. The memory 1102 stores a program or instructions executable on the processor 1101. For example, when the communication device 1100 is a terminal, the program or instructions, when being executed by the processor 1101, implement the various steps of the foregoing embodiments of the data collection method, and can achieve the same technical effects. When the communication device 1100 is a network-side device, the program or instructions, when being executed by the processor 1101, implement various steps of the foregoing embodiments of the data collection request method, or implement various steps of the foregoing embodiments of the data collection notification method, and can achieve the same technical effects. To avoid repetition, details are not described herein again.

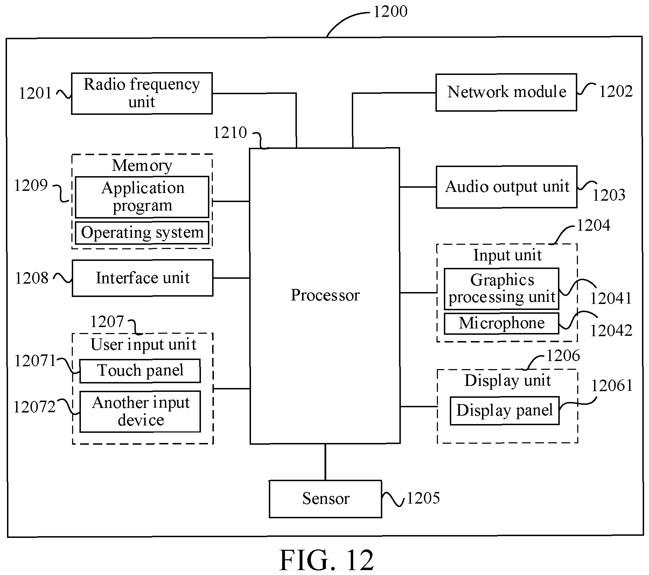

Embodiments of this application further provide a terminal, including a processor and a communication interface. The processor is configured to implement various steps of the foregoing embodiments of the data collection method. The communication interface is configured to communicate with an external device. The terminal embodiment corresponds to the foregoing method embodiment on a terminal side. Various implementation processes and implementations in the foregoing method embodiments are applicable to the terminal embodiment, and can achieve the same technical effects. Specifically, FIG. 12 is a schematic diagram of a hardware structure of a terminal that implements the embodiments of this application.

The terminal 1200 includes, but is not limited to, at least some components such as a radio frequency unit 1201, a network module 1202, an audio output unit 1203, an input unit 1204, a sensor 1205, a display unit 1206, a user input unit 1207, an interface unit 1208, a memory 1209, and a processor 1210.

Persons skilled in the art may understand that, the terminal 1200 may further include a power supply (for example, a battery) for supplying power to the components. The power supply may be logically connected to the processor 1210 by a power management system, thereby implementing functions such as charging, discharging, and power consumption management through the power management system. The terminal structure shown in FIG. 12 does not constitute a limitation on the terminal, and the terminal may include more or fewer components than shown, or combine some components, or have different component arrangements. Details are not described herein again.

It should be understood that, in the embodiments of this application, the input unit 1204 may include a graphics processing unit (Graphics Processing Unit, GPU) 12041 and a microphone 12042. The graphics processing unit 12041 performs processing on image data of a static picture or a video that is obtained by an image collection device (for example, a camera) in a video collection mode or an image collection mode. The display unit 1206 may include a display panel 12061. The display panel 12061 may be configured in the form of a liquid crystal display, an organic light-emitting diode, or the like. The user input unit 1207 includes at least one of a touch panel 12071 and another input device 12072. The touch panel 12071 is also referred to as a touchscreen. The touch panel 12071 may include two parts: a touch detection apparatus and a touch controller. The another input device 12072 may include, but not limited to, a physical keyboard, a functional key (for example, a volume control key or a switch key), a track ball, a mouse, and a joystick, which are not described herein in detail.

In the embodiments of this application, after receiving downlink data from the network-side device, the radio frequency unit 1201 may transmit the downlink data to the processor 1210 for processing. In addition, the radio frequency unit 1201 may transmit uplink data to the network-side device. Generally, the radio frequency unit 1201 includes, but is not limited to, an antenna, an amplifier, a transceiver, a coupler, a low noise amplifier, a duplexer, and the like.

The memory 1209 may be configured to store a software program or instructions and various data. The memory 1209 may mainly include a first storage area for storing a program or instructions and a second storage area for storing data. The first storage area may store an operating system, an application program or instructions required by at least one function (for example, a sound playback function and an image display function), and the like. In addition, the memory 1209 may include a volatile memory or a non-volatile memory, or the memory 1209 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DRRAM). The memory 1209 in the embodiments of this application includes, but is not limited to, these memories and any other suitable types.

The processor 1210 may include one or more processing units. Optionally, the processor 1210 integrates an application processor and a modem processor. The application processor mainly processes operations involving an operating system, a user interface, an application program, and the like. The modem processor mainly processes a wireless communication signal, and is, for example, a baseband processor. It may be understood that, the modem processor may alternatively not be integrated in the processor 1210.

The radio frequency unit 1201 is configured to receive configuration information of data collection transmitted by a target base station, where the configuration information includes fifth indication information, and the fifth indication information indicates a terminal participating in data collection.

The processor 1210 is configured to: determine, based on the configuration information, to participate in data collection, and perform data collection.

Optionally, the radio frequency unit 1201 is further configured to report a data collection report to the network-side device, where the data collection report includes data collected by the target terminal.

Embodiments of this application further provide a network-side device, including a processor and a communication interface. The processor is configured to implement various steps of the foregoing embodiments of the data collection request method, or implement various steps of the foregoing embodiments of the data collection notification method. The communication interface is configured to communicate with an external device. The network-side device embodiment corresponds to the foregoing method embodiment on a network-side device side. Various implementation processes and implementations in the foregoing method embodiments are applicable to the network-side device embodiment, and can achieve the same technical effects.

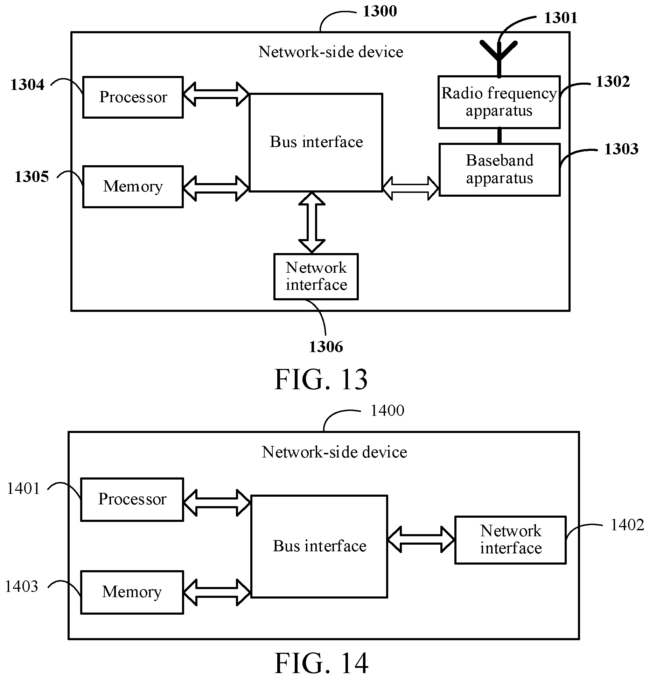

Specifically, embodiments of this application further provide a network-side device. As shown in FIG. 13, the network-side device 1300 includes an antenna 1301, a radio frequency apparatus 1302, a baseband apparatus 1303, a processor 1304, and a memory 1305. The antenna 1301 is connected to the radio frequency apparatus 1302. In an uplink direction, the radio frequency apparatus 1302 receives information through the antenna 1301, and transmits the received information to the baseband apparatus 1303 for processing. In a downlink direction, the baseband apparatus 1303 processes information to be transmitted, and transmits the processed information to the radio frequency apparatus 1302. The radio frequency apparatus 1302 processes the received information and transmits the processed information through the antenna 1301.

The method performed by the network-side device in the foregoing embodiments may be implemented in the baseband apparatus 1303. The baseband apparatus 1303 includes a baseband processor.

The baseband apparatus 1303 may include, for example, at least one baseband board. A plurality of chips are disposed on the baseband board, as shown in FIG. 13. One of the chips is, for example, a baseband processor, and is connected to the memory 1305 by a bus interface, to call a program in the memory 1305 to perform operations of the network-side device shown in the foregoing method embodiments.

The network-side device may further include a network interface 1306. The interface is, for example, a common public radio interface (common public radio interface, CPRI).

Specifically, the network-side device 1300 in the embodiments of the present invention further includes instructions or a program that are stored in the memory 1305 and executable on the processor 1304. The processor 1304 calls the instructions or program in the memory 1305 to perform the method performed by the modules in FIG. 7 or FIG. 8, and achieve the same technical effects. To avoid repetition, details are not described herein again.

Specifically, embodiments of this application further provide another network-side device. As shown in FIG. 14, the network-side device 1400 includes a processor 1401, a network interface 1402, and a memory 1403. The network interface 1402 is, for example, a common public radio interface (common public radio interface, CPRI).

Specifically, the network-side device 1400 in the embodiments of the present invention further includes instructions or a program that are stored in the memory 1403 and executable on the processor 1401. The processor 1401 calls the instructions or program in the memory 1403 to perform the method performed by the modules shown in FIG. 9, and achieve the same technical effects. To avoid repetition, details are not described herein again.

Embodiments of this application further provide a readable storage medium. The readable storage medium stores a program or instructions. The program or instructions, when executed by a processor, implement various steps of the foregoing embodiments of the data collection request method, or implement various steps of the foregoing embodiments of the data collection notification method, or implement various steps of the foregoing embodiments of the data collection method, and the same technical effects can be achieved. To avoid repetition, details are not described herein again.

The processor is a processor in the terminal in the foregoing embodiments. The readable storage medium includes a computer-readable storage medium, for example, a computer read-only memory ROM, a random access memory RAM, a magnetic disk, an optical disc, or the like.

Embodiments of this application further provide a chip. The chip includes a processor and a communication interface. The communication interface is coupled to the processor. The processor is configured to run a program or instructions, to implement various steps of the foregoing embodiments of the data collection request method, or implement various steps of the foregoing embodiments of the data collection notification method, or implement various steps of the foregoing embodiments of the data collection method, and can achieve the same technical effects. To avoid repetition, details are not described herein again.

It should be understood that the chip in the embodiments of this application may also be referred to as a system-level chip, a system chip, a chip system, a system-on-a-chip, or the like.

Embodiments of this application further provide a computer program/program product. The computer program/program product is stored in a storage medium. The computer program/program product, when being executed by at least one processor, implements various steps of the foregoing embodiments of the data collection request method, or implements various steps of the foregoing embodiments of the data collection notification method, or implements various steps of the foregoing embodiments of the data collection method, and the same technical effects can be achieved. To avoid repetition, details are not described herein again.

Embodiments of this application further provide a data collection system, including: a terminal and a network-side device. The terminal may be configured to perform the steps of the foregoing data collection method. The network-side device may be configured to perform the steps of the foregoing data collection request method, or perform the steps of the foregoing data collection notification method.

It should be noted that the terms "include", "comprise", or any other variation thereof in this specification is intended to cover a non-exclusive inclusion, which specifies the presence of stated processes, methods, objects, or apparatuses, but do not preclude the presence or addition of one or more other processes, methods, objects, or apparatuses. Without more limitations, elements defined by the sentence "including one ..." does not exclude that there are still other same elements in the processes, methods, objects, or apparatuses. In addition, it needs to be noted that the scope of the methods and apparatuses in the implementations of this application is not limited to performing the functions in the order shown or discussed, but may also include performing the functions in a substantially simultaneous manner or in reverse order based on the characteristics involved. For example, the described methods may be performed in a different order than described, and various steps may be added, omitted, or combined. Further, characteristics described with reference to some examples may be combined in other examples.

Through the descriptions of the foregoing implementations, persons skilled in the art may clearly understand that the methods in the foregoing embodiments may be implemented by means of software and a necessary general hardware platform, and certainly, may also be implemented by hardware, but in many cases, the former manner is a better implementation. Based on such an understanding, the technical solutions of this application essentially or the part contributing to the conventional technology may be implemented in a form of a computer software product. The computer software product is stored in a storage medium (for example, a ROM/RAM, a magnetic disk, or an optical disc) and includes several instructions for instructing a terminal (which may be a mobile phone, a computer, a server, an air conditioner, a network-side device, or the like) to perform the methods described in the embodiments of this application.

The embodiments of this application are described above with reference to the accompanying drawings. However, this application is not limited to the foregoing specific implementations. The foregoing specific implementations are illustrative instead of limitative. Enlightened by this application, persons of ordinary skill in the art can make many forms without departing from the idea of this application and the scope of protection of the claims. All of the forms fall within the protection of this application.

## Claims

1. A data collection request method, comprising:
transmitting, by a first network-side device, a first data collection request to a second network-side device, wherein
information carried in the first data collection request comprises at least one of the following:
type indication information, indicating that a request type of the first data collection request is data collection;
characteristic information of a terminal participating in data collection;
a type of data that needs to be collected;
a configuration for data collection; and
identifier information, used for identifying a purpose of collected data.

2. The method according to claim 1, wherein the characteristic information of the terminal comprises at least one of the following:
first indication information, indicating an area in which the terminal is located;
second indication information, indicating a capability that the terminal needs to have;
third indication information, indicating an intention of the terminal to participate in collection of data of a target type; and
fourth indication information, indicating a quantity of terminals that need to participate in data collection.

3. The method according to claim 1, further comprising, before the transmitting, by a first network-side device, a first data collection request to a second network-side device:
receiving, by the first network-side device, trigger information, wherein the trigger information indicates to trigger data collection.

4. The method according to any one of claims 1 to 3, further comprising, after the transmitting, by a first network-side device, a first data collection request to a second network-side device:
receiving, by the first network-side device, first feedback information transmitted by the second network-side device, wherein
the first feedback information indicates at least one of the following:
the first data collection request being successfully received;
the first data collection request being accepted; and
the first data collection request being rejected.

5. The method according to claim 4, wherein the method further comprises:
in a case that the first feedback information indicates that the first data collection request is rejected, after the first network-side device transmits the first data collection request, re-triggering, after waiting for a first preset time period, the transmitting of the first data collection request; or
in a case that the first feedback information indicates that the first data collection request is rejected, after the first network-side device receives the first feedback information, re-triggering, after waiting for a second preset time period, the transmitting of the first data collection request.

6. The method according to claim 4, wherein the method further comprises:
in a case that the first feedback information is not received within a third preset time period after the first data collection request is transmitted, after the first network-side device transmits the first data collection request, re-triggering, after waiting for a first preset time period, the transmitting of the first data collection request.

7. The method according to any one of claims 1 to 6, wherein the second network-side device comprises a core network device or an access network device.

8. The method according to any one of claims 1 to 6, further comprising, after the transmitting, by a first network-side device, a first data collection request to a second network-side device:
receiving, by the first network-side device, a data collection report reported by a target terminal, wherein the data collection report comprises data collected by the target terminal.

9. The method according to claim 8, wherein the receiving, by the first network-side device, a data collection report reported by a target terminal comprises: receiving, by the first network-side device, a data collection report reported by the target terminal by using a first target identifier, wherein the first target identifier is different from a second target identifier, and the second target identifier comprises an identifier assigned by a network side to the target terminal.

10. The method according to claim 8, wherein the data collection report further comprises configuration information, and the configuration information comprises at least one of the following:
characteristic information of a terminal participating in data collection;
a type of data that needs to be collected;
a configuration for data collection; and
identifier information, used for identifying a purpose of collected data.

11. A data collection request method, comprising:
receiving, by a second network-side device, a first data collection request transmitted by a first network-side device;
transmitting, by the second network-side device, a second data collection request to a target base station based on the first data collection request, wherein information carried in the second data collection request comprises at least one of the following:
type indication information, indicating that a request type of the second data collection request is data collection;
characteristic information of a terminal participating in data collection;
a type of data that needs to be collected;
a configuration for data collection; and
identifier information, used for identifying a purpose of collected data.

12. The method according to claim 11, wherein the characteristic information of the terminal comprises at least one of the following:
first indication information, indicating an area in which the terminal is located;
second indication information, indicating a capability that the terminal needs to have;
third indication information, indicating an intention of the terminal to participate in collection of data of a target type; and
fourth indication information, indicating a quantity of terminals that need to participate in data collection.

13. The method according to claim 11, further comprising, before the transmitting, by the second network-side device, a second data collection request to a target base station based on the first data collection request:
determining, by the second network-side device based on the first data collection request, a target base station participating in data collection.

14. The method according to claim 13, wherein the determining, by the second network-side device based on the first data collection request, a target base station participating in data collection comprises:
determining, by the second network-side device, a target area based on the first data collection request; and
determining, by the second network-side device based on the target area and network deployment information, a target base station covering all or a part of the target area.

15. The method according to any one of claims 11 to 14, further comprising, after the receiving, by a second network-side device, a first data collection request transmitted by a first network-side device:
transmitting, by the second network-side device, first feedback information to the first network-side device, wherein
the first feedback information indicates at least one of the following:
the second network-side device has received the first data collection request;
the second network-side device accepts the first data collection request; and
the second network-side device rejects the first data collection request.

16. The method according to any one of claims 11 to 14, further comprising, after the transmitting, by the second network-side device, a second data collection request to a target base station:
receiving, by the second network-side device, second feedback information transmitted by the target base station, wherein
the second feedback information indicates at least one of the following:
the second data collection request is successfully received;
the second data collection request is accepted; and
the second data collection request is rejected.

17. A data collection notification method, comprising:
receiving, by a target base station, a data collection request; and
transmitting, by the target base station, configuration information, wherein the configuration information comprises fifth indication information, and the fifth indication information indicates a terminal participating in data collection, wherein
information carried in the data collection request comprises at least one of the following:
type indication information, indicating that a request type of the data collection request is data collection;
characteristic information of a terminal participating in data collection;
a type of data that needs to be collected;
a configuration for data collection; and
identifier information, used for identifying a purpose of collected data.

18. The method according to claim 17, wherein the transmitting, by the target base station, configuration information comprises:
transmitting, by the target base station, a broadcast message, wherein the broadcast message comprises the configuration information; or
transmitting, by the target base station, a multicast message, wherein the multicast message comprises the configuration information and a multicast scheduling identifier.

19. The method according to claim 17, wherein the fifth indication information comprises characteristic information of a terminal participating in data collection.

20. The method according to claim 17, wherein the configuration information further comprises at least one of the following:
a type of data that needs to be collected;
a configuration for data collection.

21. The method according to claim 17 or 19, wherein the characteristic information of the terminal comprises at least one of the following:
first indication information, indicating an area in which the terminal is located;
second indication information, indicating a capability that the terminal needs to have;
third indication information, indicating an intention of the terminal to participate in collection of data of a target type; and
fourth indication information, indicating a quantity of terminals that need to participate in data collection.

22. The method according to any one of claims 17 to 21, further comprising, after the receiving, by a target base station, a data collection request:
transmitting, by the target base station, feedback information to a transmitter of the data collection request, wherein
the feedback information indicates at least one of the following:
the target base station having received the data collection request;
the target base station accepting the data collection request; and
the target base station rejecting the data collection request.

23. A data collection method, comprising:
receiving, by a target terminal, configuration information of data collection transmitted by a target base station, wherein the configuration information comprises fifth indication information, and the fifth indication information indicates a terminal participating in data collection, wherein
determining, by the target terminal based on the configuration information, to participate in data collection, and performing data collection.

24. The method according to claim 23, wherein the receiving, by a target terminal, a notification message transmitted by a target base station comprises:
receiving, by the target terminal, a broadcast message transmitted by the target base station, wherein the broadcast message comprises the configuration information; or
receiving, by the target terminal, a multicast message scheduled by a target multicast scheduling identifier, wherein the target multicast scheduling identifier is a multicast scheduling identifier that the target terminal needs to monitor, and the multicast message comprises the configuration information and the target multicast scheduling identifier.

25. The method according to claim 24, wherein the target multicast scheduling identifier is one of the following:
a multicast scheduling identifier that needs to be monitored and that is assigned by a second network-side device or the target base station to the target terminal based on subscription information of the target terminal;
a multicast scheduling identifier that needs to be monitored and that is acquired by the target terminal from user subscription information; and
a multicast scheduling identifier that needs to be monitored and that is acquired by the target terminal from information stored in a universal subscriber identity module USIM.

26. The method according to claim 23, wherein the determining, by the target terminal based on the configuration information, to participate in data collection comprises:
in a case that the target terminal determines that the fifth indication information matches a property of the target terminal, determining to participate in data collection, wherein the fifth indication information comprises characteristic information of a terminal participating in data collection.

27. The method according to claim 26, wherein the determining that the fifth indication information matches the property of the target terminal comprises:
determining, by the target terminal, that N properties of the target terminal match the fifth indication information, wherein N is a positive integer, M ≥ N ≥ 1, the fifth indication information comprises characteristic information of a terminal participating in data collection, and M is a quantity of all properties comprised in the characteristic information.

28. The method according to claim 23, wherein the configuration information further comprises at least one of the following:
a type of data that needs to be collected;
a configuration for data collection; and
identifier information, used for identifying a purpose of collected data.

29. The method according to any one of claims 23 to 28, further comprising, after the performing data collection:
reporting, by the target terminal, a data collection report to a network-side device, wherein the data collection report comprises data collected by the target terminal, and the network-side device comprises a first network-side device or a third network-side device associated with the first network-side device.

30. The method according to claim 29, wherein the reporting, by the target terminal, a data collection report to a network-side device comprises:
reporting, by the target terminal, the data collection report by using a first target identifier.

31. The method according to claim 30, wherein the first target identifier is different from a second target identifier, and the second target identifier comprises an identifier assigned by a network side to the target terminal.

32. The method according to claim 29, wherein the data collection report further comprises the configuration information.

33. A data collection request apparatus, comprising:
a determining module, configured to determine that data collection needs to be triggered; and
a first transmitting module, configured to transmit a first data collection request to a second network-side device,
information carried in the first data collection request comprises at least one of the following:
type indication information, indicating that a request type of the first data collection request is data collection;
characteristic information of a terminal participating in data collection;
a type of data that needs to be collected;
a configuration for data collection; and
identifier information, used for identifying a purpose of collected data.

34. The apparatus according to claim 33, wherein the apparatus further comprises:
a first receiving module, configured to receive first feedback information transmitted by the second network-side device after the first data collection request is transmitted to the second network-side device, wherein
the first feedback information indicates at least one of the following:
the first data collection request being successfully received;
the first data collection request being accepted; and
the first data collection request being rejected.

35. The apparatus according to claim 34, wherein the apparatus further comprises:
a trigger module, configured to: in a case that the first feedback information indicates that the first data collection request is rejected, after the first data collection request is transmitted, re-trigger, after waiting for a first preset time period, the transmitting of the first data collection request; or in a case that the first feedback information indicates that the first data collection request is rejected, after the first feedback information is received, re-trigger, after waiting for a second preset time period, the transmitting of the first data collection request.

36. The apparatus according to claim 34, wherein the trigger module is further configured to: in a case that the first feedback information is not received within a third preset time period after the first data collection request is transmitted, after the first data collection request is transmitted, re-trigger, after waiting for a first preset time period, the transmitting of the first data collection request.

37. A data collection request apparatus, comprising:
a second receiving module, configured to receive a first data collection request transmitted by a first network-side device; and
a second transmitting module, configured to transmit a second data collection request to a target base station based on the first data collection request, wherein information carried in the second data collection request comprises at least one of the following:
type indication information, indicating that a request type of the second data collection request is data collection;
characteristic information of a terminal participating in data collection;
a type of data that needs to be collected;
a configuration for data collection; and
identifier information, used for identifying a purpose of collected data.

38. The apparatus according to claim 37, wherein the apparatus further comprises:
a first determining module, configured to: before the second data collection request is transmitted to the target base station, determine, based on the first data collection request, a target base station participating in data collection.

39. The apparatus according to claim 37, wherein the first determining module determining, based on the first data collection request, the target base station participating in data collection, comprises:
determining a target area based on the first data collection request; and
determining, based on the target area and network deployment information, a target base station covering all or a part of the target area.

40. The method according to any one of claims 37 to 39, wherein the second transmitting module is further configured to transmit first feedback information to the first network-side device,
the first feedback information indicates at least one of the following:
the first data collection request being received;
the first data collection request being accepted; and
the first data collection request being rejected.

41. The method according to any one of claims 37 to 39, wherein the second receiving module is further configured to receive second feedback information transmitted by the target base station, wherein
the second feedback information indicates at least one of the following:
the second data collection request being successfully received;
the second data collection request being accepted; and
the second data collection request being rejected.

42. A data collection notification apparatus, comprising:
a third receiving module, configured to receive a first data collection request; and
a third transmitting module, configured to transmit configuration information, wherein the configuration information comprises fifth indication information, and the fifth indication information indicates a terminal participating in data collection, wherein
information carried in the data collection request comprises at least one of the following:
type indication information, indicating that a request type of the data collection request is data collection;
characteristic information of a terminal participating in data collection;
a type of data that needs to be collected;
a configuration for data collection; and
identifier information, used for identifying a purpose of collected data.

43. The apparatus according to claim 42, wherein the third transmitting module transmitting the configuration information comprises:
transmitting a broadcast message, wherein the broadcast message comprises the configuration information; or
transmitting a multicast message, wherein the multicast message comprises the configuration information and a multicast scheduling identifier.

44. A data collection apparatus, comprising:
a fourth receiving module, configured to receive configuration information of data collection transmitted by a target base station, wherein the configuration information comprises fifth indication information, and the fifth indication information indicates a terminal participating in data collection; and
a collection module, configured to: determine, based on the configuration information, to participate in data collection, and perform data collection.

45. The apparatus according to claim 44, wherein the fourth receiving module receiving the notification message transmitted by the target base station comprises:
receiving a broadcast message transmitted by the target base station, wherein the broadcast message comprises the configuration information; or
receiving a multicast message scheduled by a target multicast scheduling identifier, wherein the target multicast scheduling identifier is a multicast scheduling identifier that the terminal needs to monitor, and the multicast message comprises the configuration information and the target multicast scheduling identifier.

46. The apparatus according to claim 44, wherein the apparatus further comprises:
a fourth transmitting module, configured to report a data collection report to a network-side device, wherein the data collection report comprises data collected by the target terminal, and the network-side device comprises a first network-side device or a third network-side device associated with the first network-side device.

47. The apparatus according to claim 46, wherein the fourth transmitting module reporting the data collection report to the network-side device comprises:
reporting the data collection report by using a first target identifier.

48. A network-side device, comprising a processor and a memory, wherein the memory stores a program or instructions executable on the processor, and the program or instructions, when being executed by the processor, implement the steps of the data collection request method according to any one of claims 1 to 16, or implement the steps of the data collection notification method according to any one of claims 17 to 22.

49. A terminal, comprising a processor and a memory, wherein the memory stores a program or instructions executable on the processor, and the program or instructions, when being executed by the processor, implement the steps of the data collection method according to any one of claims 23 to 32.

50. A computer storage medium, wherein the computer storage medium stores a program or instructions, and the program or instructions, when being executed by a processor, implement the steps of the data collection request method according to any one of claims 1 to 16, or implement the steps of the data collection notification method according to any one of claims 17 to 22, or implement the steps of the data collection method according to any one of claims 23 to 32.
